# EUROPÄISCHE PATENTSCHRIFT

(11) **EP 1 747 356 B1**
(45) Veröffentlichungstag und Bekanntmachung des Hinweises auf die Patenterteilung: **28.12.2011**
(21) Anmeldenummer: 05740916.1
(22) Anmeldetag: 29.04.2005
(51) Int. Cl.: F01N 3/28

(54) **KATALYSATOR-TRÄGERKÖRPER FÜR EINEN MOTORNAH EINZUSETZENDEN KATALYTISCHEN KONVERTER**
CATALYST CARRIER BODY FOR A CATALYTIC CONVERTER TO BE USED CLOSE TO THE MOTOR
CORPS SUPPORT DE CATALYSEUR DESTINE A UN CONVERTISSEUR CATALYTIQUE EMPLOYE A PROXIMITE DU MOTEUR

(30) Priorität: 19.05.2004 DE 102004024685
(43) Veröffentlichungstag der Anmeldung: 31.01.2007
(73) Patentinhaber: Emitec Gesellschaft für Emissionstechnologie mbH, 53797 Lohmar (DE)
(72) Erfinder: MAUS, Wolfgang, 51429 Bergisch Gladbach (DE); BRÜCK, Rolf, 51429 Bergisch Gladbach (DE)
(74) Vertreter: Rössler, Matthias
(86) Internationale Anmeldenummer: PCT/EP2005/004678
(87) Internationale Veröffentlichungsnummer: WO 2005/116411

(56) Entgegenhaltungen:
- DE-A- 19 636 040
- DE-A1- 3 838 295
- DE-A1- 19 900 148
- DE-U1- 9 317 050
- US-A1- 2001 016 266
- US-A1- 2003 072 694

## Beschreibung

Die Erfindung betrifft einen katalytischen Konverter, umfassend einen Katalysator-Trägerkörper geeignet für den Einsatz in einer Abgasanlage nahe einer Verbrennungskraftmaschine, sowie eine entsprechende Abgasanlage und ein entsprechendes Fahrzeug.

Aufgrund eines wachsenden Umweltbewusstseins und der damit einhergehenden gesetzlichen Bestimmungen, welche immer höhere Anforderungen an die Abgassysteme im Automobilbau stellen, wurden die Abgassysteme von Automobilen in der Vergangenheit stetig weiterentwickelt. Dabei werden mittlerweile eine Vielzahl von Komponenten eingesetzt, die jeweils unterschiedliche Funktionen innerhalb des Abgassystems erfüllen. Es sind beispielsweise Startkatalysatoren bekannt, die ein besonders kleines Volumen haben und somit schnell nach einem Kaltstart der Verbrennungskraftmaschine ihre zur katalytischen Umsetzung erforderliche Starttemperatur erreichen. Weiterhin sind beispielsweise elektrisch beheizbare Katalysatoren bekannt, die ebenfalls ein verbessertes Kaltstartverhalten des Abgassystems ermöglichen. Sogenannte Adsorber haben im Abgassystem einer Verbrennungskraftmaschine die Aufgabe, bestimmte im Abgas enthaltene Schadstoffe für einen gewissen Zeitraum zu adsorbieren. Diese Schadstoffe werden so lange gespeichert, bis z.B. ein nachgeordneter katalytischer Konverter seine Betriebstemperatur erreicht hat und schließlich mit der Umsetzung der nun desorbierenden Schadstoffe beginnen kann. Insbesondere in Abgassystemen von Dieselmotoren werden zudem Partikelfallen bzw. Partikelfilter eingesetzt, welche im Abgassystem enthaltene Rußpartikel oder andere Feststoffe auffangen, wobei die aufgefangenen Partikelansammlungen kontinuierlich oder diskontinuierlich in gasförmige Bestandteile umgesetzt werden, beispielsweise durch die Zufuhr hoher thermischer Energie oder entsprechender Additive.

Zur Erzielung einer möglichst effektiven Reinigung des Abgases werden die unterschiedlichen Komponenten in geeigneter Weise hintereinander kombiniert, so dass mittlerweile eine Mehrzahl von solchen Komponenten in einer Abgasanlage eines Automobils vorgesehen sind. Damit nehmen jedoch die stromaufwärts angeordneten Komponenten zunehmend Einfluss auf die Effektivität bzw. das Umsetzungsvermögen der nachgeordneten Abgasbehandlungskomponenten. Dieses System wird somit zunehmend instabiler, gerade bei den sich häufig ändernden Zusammensetzungen bzw. Zuständen (Druck, Temperatur, Verteilung, Strömungsgeschwindigkeit) des Abgases. Hinzu treten technische Schwierigkeiten im Zusammenhang mit der Installation von Turboladern, Additivzugaben, usw.. Auch eine Temperaturführung des Abgases ist von wesentlicher Bedeutung, weil die jeweils vorgesehenen Katalysatorsubstanzen stets nur einen begrenzten Temperaturbereich haben, in dem sie aktiv sind, wobei auch hier die Schwierigkeiten der Abgastemperaturschwankungen kompensiert werden müssen. Immer noch problematisch sind dabei Kaltstartphasen bzw. Leerlaufphasen des Motors, da sich hier die Abgasbehandlungskomponenten bzw. das Abgas z. T. auf Temperaturen abkühlen, die eine unverzügliche Umsetzung aller Schadstoffe unmittelbar nach Beginn der neuen Belastungsphase der Verbrennungskraftmaschine nicht immer gewährleisten. Zusätzlich werden alle Abgasbehandlungskomponenten erheblichen thermischen und dynamischen Wechselbeanspruchungen während des Betriebes ausgesetzt, so dass besondere Anforderungen an die Dauerhaltbarkeit solcher Komponenten gestellt werden müssen.

Ein Beispiel für ein solches Abgassystem wird in der WO 02/083274 beschrieben. Dieses Abgassystem hat sich in der Vergangenheit bereits sehr gut bewährt, wenngleich Tests gezeigt haben, welch erheblichen Einfluss Art und Wirkung des Startkatalysators auf die Effektivität der nachgeschalteten Abgasbehandlungskomponenten haben.

In der US 2003/072694 A1 wird eine offene Partikelfalle für Partikel im Abgasstrom einer Verbrennungskraftmaschine beschrieben, die im Abgassystem derart angeordnet wird, dass sie vergleichsweise niedrigen Temperaturen ausgesetzt ist. Die Partikelfalle wird bevorzugt bei einer Temperatur um 250°C regeneriert. Zudem werden dort Umlenkungen sowie Verwirbelungs- und Beruhigungszonen mittels Leitschaufeln gebildet, die eine verlängerte Verweilzeit der Partikel in der Partikelfalle selbst und damit eine größere Wahrscheinlichkeit der Umsetzung der Partikel zur Folge haben.

In der DE 199 00 148 A1 wird ein Katalysator für ein Zweirad beschrieben, der durch abwechselndes Aufheizen und Abkühlen sowie durch Vibrationen hohen dynamischen Belastungen ausgesetzt ist. Hierbei wird beschrieben, dass der vorgeschlagene Katalysator durch eine geeignete Schweißpunktanordnung für kurzfristige Temperaturspitzen von etwa 1000°C geeignet ist.

In der DE 93 17 050 U1 wird eine mechanisch stabilisierte Heizkatalysatoranordnung beschrieben, bei der ein elektrisch beheizbarer Wabenkörper mittels einer Mehrzahl von Stützelementen gegen einen zweiten Wabenkörper abgestützt ist. Die Dimensionierung der Stützelemente ist dabei so gewählt, dass der elektrisch beheizbare Wabenkörper auch bei hohen thermischen und dynamischen Belastungen sicher fixiert ist.

In der US 2001/016266 A1 wird ein Katalysator beschrieben, der aus besonders dünnen (8 bis 25 µm) Metallfolien aufgebaut ist. Insbesondere befasst sich dieses Dokument mit einem Lötverfahren für diese dünnen Metallfolien. In diesem Zusammenhang werden bevorzugte Lot- und Folienmaterialien für eine vorteilhafte Ausbildung von Lötverhindungen genannt. Wesentlich für die Beständigkeit eines solchen Katalysators im Abgassystem sind demnach die Lotkornfraktion und ein Aluminiumgehalt der Metallfolien von mindestens 6,5%.

In der DE 196 36 040 A wird ein Abgassystem beschrieben, bei der zur NOx-Reduktion eine Abgasrückführung eingerichtet ist. Hierbei wird ein motornah einsetzbarer Oxidationskatalysator zur Abgasvorbehandlung vorgeschlagen, der aus Metallfolien gefertigt ist, die eine Foliendicke von weniger als 50 µm aufweisen. Mittels des Oxidationskatalysators und der Einstellung der Abgasrückführung wird das Einspeicherungs- und Regenerierungsverhalten des nachgelagerten NOx-Adsorbers beeinflusst. Der (nicht motornah) angeordnete NOx-Adsorber kann - wie auch der Oxidationskatalysator - mit metallischen Folien gebildet sein, und die beschichteten Kanäle können unterschiedlich ausgeführt sein, so dass eine Verwirbelung des Abgasstromes in den Kanälen gezielt einstellbar ist. Damit zeigt die DE 196 36 040 A den Oberbegriff des Patentanspruchs 1.

Hiervon ausgehend ist es Ziel der vorliegenden Erfindung, die bekannten Abgassysteme zumindest teilweise hinsichtlich ihrer Funktionalität und/oder Effektivität zu verbessern. Insbesondere sollen die bekannten technischen Probleme zumindest gelindert werden. Vordergründig soll ein katalytischer Konverter angegeben werden, der geeignet für den Einsatz in einer Abgasanlage nahe einer Verbrennungskraftmaschine ist. Die Ausgestaltung des Katalysator-Trägerkörpers bzw. des schließlich beschichteten katalytischen Konverters soll derart verbessert werden, dass die Funktion bzw. Effektivität nachgeschalteter Komponenten nicht wesentlich zum Nachteil beeinträchtigt ist. Zudem soll der Katalysator-Trägerkörper bzw. auch der katalytische Konverter den hohen thermischen und dynamischen Belastungen im Abgassystem einer Verbrennungskraftmaschine dauerhaft standhalten.

Diese Aufgaben werden gelöst mit den Merkmalen des Patentanspruchs 1. Weitere vorteilhafte Ausgestaltungen des katalytischen Konverters, einer entsprechenden Abgasanlage sowie eines entsprechenden Fahrzeuges gehen aus den abhängig formulierten Patentansprüchen hervor. Grundsätzlich sei darauf hingewiesen, dass alle in den Patentansprüchen einzeln aufgeführten Merkmale in beliebiger, technologisch sinnvoller, Weise miteinander kombiniert werden können und weitere Ausgestaltungen der Erfindung aufzeigen.

Mit "Katalysator-Trägerkörper" ist eine Struktur gemeint, welche geeignet zur Aufbringung einer katalytisch aktiven Beschichtung ist. Der Katalysator-Trägerkörper weist üblicherweise eine sehr große Oberfläche pro Volumeneinheit auf, um einen möglichst innigen Kontakt zwischen Gasstrom und der auf der Oberfläche befindlichen Beschichtung zu realisieren. Solche Katalysator-Trägerkörper werden vielfach aufgrund ihrer Kanalstruktur als Wabenkörper bezeichnet. Sie können einteilig oder auch mehrteilig aufgebaut sein. Bekannt sind Katalysator-Trägerkörper aus metallischen Materialien sowie aus Keramik. Metallische Katalysator-Trägerkörper weisen üblicherweise eine Mehrzahl von zumindest teilweise strukturierten Blechlagen auf, die zu einem solchen Wabenkörper zusammengefügt sind, insbesondere verlötet oder verschweißt. Keramische Wabenkörper werden üblicherweise extrudiert oder gesintert.

Mit "nahe" einer Verbrennungskraftmaschine ist insbesondere gemeint, dass sich ein solcher Katalysator-Trägerkörper in einem Abstand kleiner 50 cm zum Auslass des Brennraumes der Verbrennungskraftmaschine befindet. Bevorzugt wird ein solcher Katalysator-Trägerkörper noch deutlich näher zu dem Brennraum bzw. der Verbrennungskraftmaschine positioniert, beispielsweise mit einem Abstand kleiner 20 cm, und gegebenenfalls ragt ein solcher Katalysator-Trägerkörper sogar zumindest teilweise in innere Bereiche der Verbrennungskraftmaschine hinein. Ganz besonders bevorzugt ist die Positionierung eines solchen Katalysator-Trägerkörpers in einem Bereich zwischen Verbrennungskraftmaschine und dem sogenannten Krümmer, welcher die Teilabgasstränge der Abgasleitung beschreibt, die von den Brennräumen einzeln zu einer einheitlichen Abgasleitung zusammengeführt werden.

Der katalytische Konverter, der einen Katalysator-Trägerkörper umfasst, ist mit einer katalytisch aktiven Beschichtung versehen. Bevorzugt werden hierbei Beschichtungen eingesetzt, die bereits bei relativ geringen Temperaturen mit der Umsetzung von in Abgasen enthaltenen Schadstoffen beginnen, beispielsweise bei Temperaturen von ca. 200°C. Eine solche Beschichtung hat eine Trägersubstanz, in die die Katalysatorsubstanz imprägniert sein kann. Als Trägersubstanz wird bevorzugt sogenannte Washcoat eingesetzt, der im wesentlichen auf Aluminiumoxid basiert. Der Washcoat stellt eine zerklüftete und poröse Trägersubstanz dar, die einen innigen Kontakt mit dem Abgas gewährleistet. In bzw. auf den Washcoat ist nunmehr die Katalysatorsubstanz aufgebracht, die beispielsweise kleine Partikel aus Edelmetallen, z. B. Platin, Palladium oder Rhodium bzw. Kombinationen aus mehreren Edelmetallen und/oder seltenen Erden umfasst. Die Zusammensetzung und die Struktur des Washcoats bzw. der Katalysatorsubstanz ist so gewählt, dass das Abgas mit der Beschichtung in Wechselwirkung tritt und so eine chemische Umsetzung in harmlose Stoffe ausgelöst bzw. stark beschleunigt wird.

In diesem Zusammenhang ist es besonders vorteilhaft, dass die Beschichtung eine Trägersubstanz umfasst, die eine Schichtdicke im Bereich von 10 µm bis 30 µm (Mikrometer) aufweist. Mit Trägersubstanz ist insbesondere der zuvor beschriebene Washcoat gemeint. Die Schichtdicke stellt dabei einen gemittelten Wert dar. Für den Fall, dass die Schichtdicke beispielsweise über die Länge des Katalysator-Trägerkörpers bzw. des katalytischen Konverters variiert, so ist die hier angegebene Schichtdicke als Obergrenze zu betrachten, insbesondere die 30µm-Grenze. Die hier vorgeschlagene Schichtdicke ist relativ dünn und begründet eine hohe Haftwirkung auf dem Katalysator-Trägerkörper. Die enormen thermischen und dynamischen Belastungen haben bei größeren Schichtdicken eine zumindest teilweise Ablösung der Trägersubstanz bzw. der Beschichtung zur Folge, so dass die Effektivität des katalytischen Konverters mit der Zeit rasch abnehmen würde. Au-βerdem führten die herausgelösten Teile zu Beschädigungen bzw. Störungen der nachgeschalteten Abgasbehandlungskomponenten. Dies wird hier durch die geringe Schichtdicke verhindert bzw. deutlich reduziert.

Außerdem wird vorgeschlagen, dass die Beschichtung eine Katalysatorsubstanz umfasst, die eine Konvertierung von CO (Kohlenmonoxid) begünstigt, HC (Kohlenwasserstoff) aber nicht umwandelt. Damit liegt eine sogenannte Selektivität" der Beschichtung vor. Das heißt mit anderen Worten, dass die Beschichtung nur auf ganz bestimmte Schadstoffkomponenten im Gasstrom bzw. Abgas einwirkt und diese konvertiert, also in andere Bestandteile umwandelt. Hier wird nun vorgeschlagen, dass die katalytisch aktive Beschichtung eine Konvertierung von Kohlenmonoxid hin zu Kohlendioxid begünstigt bzw. bewirkt, andererseits jedoch im Gasstrom bzw. Abgas enthaltene Kohlenwasserstoffe im wesentlichen chemisch unverändert vorbei strömen lässt. Der Kohlenwasserstoff wird in einer der im Abgassystem nachgeschalteten Abgasbchandlungskomponenten umgewandelt.

So hilft der Kohlenwasserstoff beispielsweise zur Regeneration nachgeschalteter Partikelfilter, vor denen ein Oxidationskatalysator zur Umsetzung von solchen Kohlenwasserstoffen platziert ist. Der Oxidationskatalysator bewirkt eine Verbrennung der Kohlenwasserstoffe, wobei eine erhöhte Temperatur des Abgases bewirkt wird, die schließlich eine thermische Regeneration bzw. Umsetzung von im Partikelfilter angesammelte Rußpartikeln bewirkt. Ebenso sind diese Kohlenwasserstoffe auch geeignet, bei einem nachgeschalteten Adsorber gespeicherte Stickoxide zu konvertieren.

Aufgrund der Tatsache, dass der hier beschriebene katalytische Konverter die unverbrannten Kohlenwasserstoffe durchlässt, kann auf eine separate Kraftstoffeinspritzung vor dem Oxidationskatalysator bzw. dem Adsorber oder aber auch auf die Produktionen großer Mengen von unverbrannten Kohlenwasserstoffen mittels der Verbrennungskraftmaschine (die nicht komplett mittels des katalytischen Konverters umgesetzt werden können) verhindert werden, so dass sich schließlich sogar Vorteile hinsichtlich des Verbrauchs derartiger Verbrennungskraftmaschinen einstellen.

Bei der Eignung eines Katalysator-Trägerkörpers für die Anordnung nahe einer Verbrennungskraftmaschine sind insbesondere die dort herrschenden Druckverhältnisse und auftretenden Temperaturschwankungen zu berücksichtigen. In diesen Bereichen treten extrem hohe Temperaturen auf, insbesondere bis 1.000°C oder sogar darüber hinaus. Außerdem ist zu berücksichtigen, dass hier unmittelbar hinter den Brennräumen die Abgaspulsation besonders unvermittelt auf den Katalysator-Trägerkörper auftrifft, die aus der Verbrennung des Kraftstoffgemischs resultieren und sich in der Abgasleitung fortzusetzen. Außerdem ist zu berücksichtigen, dass zum Ausstoßzeitpunkt des Abgases zum Teil noch ein beachtlicher Bestandteil von unverbrannten Kohlenwasserstoffen befindet, der unter Umständen aufgrund einer katalytisch aktiven Beschichtung auf dem Katalysator-Trägerkörper zu einer "Nachverbrennung" im Inneren des Katalysator-Trägerkörpers führt, so dass noch deutlich höhere Temperaturspitzen unter Umständen erreicht werden. Diese bilden sich je nach Position der Kohlenwasserstoffe im Abgas an unterschiedlichen Stellen des Katalysator-Körpers aus, so dass jeweils an verschiedenen Stellen sogenannte "hot spots" entstehen, die zu sehr unterschiedlichen thermischen Beanspruchungen des Katalysator-Trägerkörpers über dessen Querschnitt bzw. dessen Volumen zur Folge haben. Unter Berücksichtigung dieser Faktoren sind offensichtlich nicht alle bekannten Katalysator-Trägerkörper für einen solchen Einsatz geeignet. Auf die Besonderheiten des hier vorliegenden Katalysator-Trägerkörpers wird im folgenden noch detaillierter eingegangen.

Die durchströmbaren Kanäle des Katalysator-Trägerkörpers haben in der Regel einen gradlinigen Verlauf. Insbesondere verlaufen die Kanäle im wesentlichen parallel zueinander und sogar auch parallel zu einer Zentrumsachse des Katalysator-Trägerkörpers. Dadurch wird ermöglicht, dass der Katalysator-Trägerkörper einen geringen Staudruck produziert. Ein unerwünscht hoher Staudruck kann zu veränderten Druckverhältnissen in der Brennkammer führen und hätte somit eine Minderung der Motorleistung zur Folge.

Beim Ausstoß des Abgases aus den Brennräumen bildet sich üblicherweise eine turbulente Strömung aus. Bei der nahen Anordnung eines solchen Katalysator-Trägerkörpers ist, gegebenenfalls auch abhängig vom Betriebszustand der Verbrennungskraftmaschine, häufig davon auszugehen, dass der Gasstrom bzw. das Abgas mit einem turbulenten Strömungsverhalten auf den Katalysator-Trägerkörper bzw. dessen Eintrittsseite trifft. Bei der den Erfindung zugrundeliegenden Untersuchungen hat sich nun herausgestellt, dass es von Vorteil für die nachgeschalteten Abgasbehandlungskomponenten ist, wenn diese turbulente Strömung aufrechterhalten wird bzw. mit dem Katalysator-Trägerkörper generiert wird. Deshalb weist der Katalysator-Trägerkörper Mittel zur Aufrechterhaltung und/oder Erzeugung einer turbulenten Durchströmung des Abgasstromes durch die Kanäle auf. Solche "Mittel" umfasst insbesondere eine entsprechende Ausgestaltung der Kanalquerschnitte bzw. der Kanallänge. Die Kanäle sind zumindest teilweise mit Mikrostrukturen bzw. Hindernissen ausgeführt, die eine Druckdifferenz bezüglich des hindurchströmenden Gasstromes lokal bewirken, so dass diese Druckdifferenz vor und neben dem Hindernis bzw. der Mikrostruktur so groß wird, dass dahinter Verwirbelungen, etc. entstehen. Aufgrund der Drehimpulserhaltung setzen sich diese Wirbel dann in Strömungsrichtung weiter fort.

Von besonderer Bedeutung hierbei ist auch die bei der Durchströmung des Katalysator-Trägerkörpers bzw. des katalytischen Konverters auftretende Reynold'sche Zahl, die mit den Mitteln bewirkt wird. Die Reynold'sche Zahl ist der Quotient aus der zweifachen kinetischen Energie des bewegten Gasvolumens und der verbrauchten Reibungsenergie bei der Bewegung. Die Reynold'sche Zahl ist damit ein Maß dafür, ob eine Strömung laminar oder turbulent ist. Ist die kinetische Energie kleiner als die Reibungsenergie, so ist die Strömung laminar. Bei größerer kinetischer Energie, d. h. insbesondere bei hoher Strömungsgeschwindigkeit, schlägt die Strömung in eine turbulente Strömung um bzw. bleibt die turbulente Strömung erhalten. Die jeweiligen auftretenden kinetischen Energien des Abgasstromes bzw. die auftretenden Strömungsgeschwindigkeiten sind während des Betriebes einer Verbrennungskraftmaschine üblicherweise nicht konstant, so dass beispielsweise im Lastbetrieb hohe Strömungsgeschwindigkeiten bzw. kinetische Energien des Abgasstromes bereitgestellt werden, während in Lastpausen bzw. in Leerlaufperioden nur geringe kinetische Energie des Abgasstromes vorliegt. Bevorzugt ist der Katalysator-Trägerkörper so gestaltet, dass er die turbulente Strömung in den Lastphasen zumindest aufrechterhält und während der Ruhephasen ggf. produziert.

Weiter ist der Katalysator-Trägerkörpers mit metallischen Folien ausgeführt, wobei die bei einer Temperatur von 900°C zumindest eine Dehngrenze R_{p0,2} von 50 N/mm² haben. Damit wird zum Ausdruck gebracht, dass die eingesetzten metallischen Folien eine besonders hohe Festigkeit bei hohen Temperaturen aufweisen. Die Dehngrenze R_{p0.2} beträgt vorteilhafterweise sogar mindestens 75 N/mm².

Die Dehngrenze R_{p0,2} beschreibt die Spannung, bei der nach Entlastung einer Zugprobe eine bleibende Dehnung von 0,2 % festgestellt wird. Die Dehngrenze stellte üblicherweise eine Art Ersatz-Streckegrenze für Materialien dar, die keine ausgeprägte Streckgrenze aufweisen. Zur Ermittlung der Dehngrenze wird eine Zugprobe bei der hier angegebenen Temperatur von 900°C in Achsrichtung belastet. Die Kraft wird zunehmend gesteigert, wobei ein Spannungs-Dehnungs-Verlauf aufgezeichnet wird. Ausgehend von diesem Spannungs-DehnungsDiagramm können unterschiedliche Festigkeits- und Verformungskenngrößen der Werkstoffe abgeleitet werden. Dieser Verlauf ist im wesentlichen gekennzeichnet durch eine elastische Verformung, die als sogenannte Hooke'sche Gerade bezeichnet wird, sowie einen Kurvenanteil, der das plastische Verhalten des Werkstoffs bzw. der Zugprobe charakterisiert. Die Bestimmung der 0,2 %-Dehngrenze (R_{p0,2}) ist eine werkstofftechnische Grundlage und als bekannt anzusehen.

Besonders vorteilhaft ist es, wenn in analoger Weise ein Zugversuch mit dem Wabenkörper aufgebaut aus metallischen Folien durchgeführt wird, wobei der Wabenkörper selbst nach dem Fügeprozess, also dem Verschweißen bzw. Hochtemperatur-Verlöten der metallischen Folien miteinander, eine Dehngrenze R_{p0,2} von mindestens 50 N/mm² bzw. sogar mindestens 75 N/mm² hat. Gerade in diesem Fall kann mit einer reduzierten Foliendicke gearbeitet werden, beispielsweise mit einer Foliendicke von 40 µm bis 65 µm. Die reduzierte Foliendicke hat wiederum einen verbessertes Anspringverhalten eines entsprechenden katalytischen Konverters zur Folge, da dieser eine geringere Wärmekapazität bereitstellt und somit auf dynamische Temperaturwechsel schneller reagieren kann.

Außerdem ist es vorteilhaft, wenn der Katalysator-Trägerkörper mit metallischen Folien aufgebaut ist, die aus einem Eisen-Werkstoff gebildet sind, wobei als größter Legierungsbestandteil Nickel vorgesehen ist. Besonders bevorzugt ist, dass der Legierungsbestandteil Nickel in einem Bereich von 30 Gew.-% (Gewichtsprozent) bis 34 Gew.-% liegt.

Der auf Eisen basierende Werkstoff hat demnach beispielsweise zwischen 30 Gew.-% und 34 Gew.-% Nickel und gegebenenfalls zwischen 18 Gew.-% und 22 Gew.-% Chrom als Legierungsbestandteile. Damit ist ein Werkstoff angegeben, der in besonderem Maße den thermischen und korrosiven Umgebungsbedingungen im Abgassystem mobiler Verbrennungskraftmaschinen standhält.

Gemäß einer Weiterbildung hat der Katalysator-Trägerkörper eine Länge in Richtung einer Achse und einen maximalen Durchmesser, wobei das Verhältnis aus Länge zu maximalem Durchmesser höchstens 1 beträgt [^{L}/D ≤ 1]. Gerade bei einer Ausgestaltung des Katalysator-Trägerkörpers mit parallel zur Achse verlaufenden Kanälen entspricht die Länge des Katalysator-Trägerkörpers der Länge der Kanäle. Mit Durchmesser ist die maximale Erstreckung des Katalysator-Trägerkörpers senkrecht zur Achse gemeint, wobei hier der Begriff "Durchmesser" nicht nur auf kreisförmige Querschnitte des Katalysator-Trägerkörpers anzuwenden ist. Ein "maximaler" Durchmesser kann vorliegen, wenn der Querschnitt des Katalysator-Trägerkörpers zwar in Richtung der Achse konstant ist, jedoch selbst nicht rotationssymmetrisch ist. Beispiele hierfür sind eckige, ovale oder ähnliche Querschnittsformen. Zudem ist auch möglich, dass die Querschnittsform zwar konstant, der Flächeninhalt in Richtung der Achse jedoch variabel gestaltet ist. Dann ist der maximale Durchmesser der, der in der Querschnittsfläche angesiedelt ist, die den größten Flächeninhalt aufweist. Bevorzugt entspricht der maximale Durchmesser in etwa einer Auslassbohrung der Verbrennungskraftmaschine bzw. dem Querschnitt des Krümmers. So liegen die maximalen Durchmesser bevorzugt in einem Bereich kleiner 50 mm (Millimeter), insbesondere kleiner 30 mm. Dementsprechend ist die Länge des Katalysator-Trägerkörpers kleiner auszuführen. Dadurch wird sichergestellt, dass das Abgas bzw. der Gasstrom nur über eine relativ kurze Strecke durch die engen Kanäle hindurchgeführt wird, so dass nur über eine kurze Strecke Reibung auf die jeweiligen Teilgasströme einwirkt. Somit stellt auch das hier angegebene Verhältnis aus Länge zu maximalem Durchmesser ein Mittel zur Aufrechterhaltung einer turbulenten Durchströmung des Gasstromes durch die Kanäle dar. Auch wenn das angegebene Verhältnis besonders bei einer Integration des Katalysator-Trägerkörpers vorteilhaft ist, können andernorts auch hiervon abweichende Verhältnisse bereitgestellt werden.

Nach einer Weiterbildung der Katalysator-Trägerkörper eine Kanaldichte, die im Bereich von 50 cpsi bis 600 cpsi ("cells per square inch") liegt. Bevorzugt sind Katalysator-Trägerkörper mit einer Kanaldichte von 150 cpsi bis 400 bzw. 250 cpsi. Die Kanaldichte beschreibt einen Parameter des Katalysator-Trägerkörpers, der insbesondere das Verhältnis von Oberfläche zu Volumen sowie dem produzierten Strömungswiderstand beschreibt. Mit "Kanaldichte" ist dabei die Anzahl der Kanäle gemeint, die in einer Einheitsquerschnittsfläche des Katalysator-Trägerkörpers vorliegen. Die Einheit "cpsi" hat sich in Fachkreisen durchgesetzt, wobei 1 cpsi ("cells per sqare inch") in etwa 6,4516 Kanälen pro Quadratzentimeter entspricht. Die hier angegebene Kanaldichte ist relativ gering und bewirkt, dass relativ große Teilabgasströme durch die Kanäle hindurchgeführt werden. Dies bewirkt, dass die turbulente Strömung innerhalb des Kanals über einen längeren Zeitraum aufrechterhalten werden kann.

Der Katalysator-Trägerkörper kann mit metallischen Folien aufgebaut sein, die eine Folienstärke von mindestens 30 µm (Mikrometer) haben. Die metallische Folien bestehen aus einem hochtemperaturfesten und korrosionsbeständigen Material. Die Foliendicke ist relativ groß und unter Berücksichtigung der dort im Einsatzbereich herrschenden hohen thermischen und dynamischen Belastungen gewählt. Vorteilhafterweise beträgt die Foliendicke zwischen 50 µm und 80 µm.

Der Katalysator-Trägerkörper kann eine größere Eintrittsseite als Austrittsseite haben. Bevorzugt weist ein solcher Katalysator-Trägerkörper eine konische Form auf. Dabei weisen die Kanäle insbesondere keinen konstanten Kanalquerschnitt auf, sondern fungieren als eine Art Konfusor. Diese Querschnittsverjüngung führt dazu, dass ein stärker gebündelter Gasstrom nach Verlassen des Katalysator-Trägerkörpers vorliegt. Dies ist besonders vorteilhaft oberhalb bzw. stromaufwärts eines Turboladers, da hier eine zielgerichtete und gebündelte Zuführung des Gasstromes hin zu den kleineren Strömungshohlräumen des Turboladers ermöglicht wird.

Gemäß einer weiteren Ausgestaltung hat der Katalysator-Trägerkörper ein Gehäuse, das in Richtung des Umfangs mindestens ein Kragenelement aufweist. Vorteilhafterweise dient dieses Kragenelement zur Positionierung bzw. Fixierung des Katalysator-Trägerkörpers im Abgassystem bzw. an oder in der Verbrennungskraftmaschine. Das Kragenelement ist bevorzugt in Umfangsrichtung umlaufend ausgebildet und kann unter Umständen mit weiteren Gehäusen von Katalysator-Trägerkörpern ähnlicher Ausgestaltung verbunden sein. Bevorzugt erstreckt sich das Kragenelement senkrecht zur Achse des Katalysator-Trägerkörpers und ist insbesondere mittig oder an zumindest einer der Stirnseiten angeordnet. Das Kragenelement kann Teil des Gehäuses selbst sein, es ist aber bevorzugt, dass das Kragenelement als separates Bauteil mit dem Gehäuse des Katalysator-Trägerkörpers fügetechnisch verbunden ist, beispielsweise verschweißt. Das Kragenelement kann auch Bohrungen aufweisen, die eine lösbare Verbindung des Kragenelementes mit dem Abgassystem bzw. der Verbrennungskraftmaschine erlauben. Dadurch wird die Austauschbarkeit bzw. Ergänzung bei entsprechenden Abgassystemen mit solchen Katalysator-Trägerkörpern gewährleistet.

Nun wird auch eine Abgasanlage einer Verbrennungskraftmaschine vorgeschlagen, die eine katalytisch Konverter gemäß der hier vorliegenden Erfindung umfasst, wobei der katalytische Konverter zwischen der Verbrennungskravmaschine und einem Turbolader angeordnet ist. Ein solcher Abgas-Turbolader wird in der Regel zur Leistungserhöhung der Verbrennungskraftmaschine eingesetzt. Im Inneren des Turboladers wird ein Turbinenrad von den Abgasen angetrieben. Dieses Turbinenrad sitzt auf einer gemeinsamen Welle mit einem sogenannten Verdichterrad, das die Ansaugluft für den Verbrennungsmotor komprimiert und zu diesem hinführt. Solche Turbolader werden insbesondere auch in Verbindung mit Dieselmotoren eingesetzt. Wie bereits oben ausgerührt, eignet sich hier insbesondere ein Katalysator-Trägerkörper mit konischer Form, bei dem also eine größere Eintrittsseite als Austrittsseite vorliegt. Dadurch wird das Einströmverhalten des Abgases so günstig ausgelegt, dass der Turbolader sehr kompakt ausgeführt sein kann. Grundsätzlich sei noch darauf hingewiesen, dass unter Umständen mehrere Turbolader in einer solchen Abgasanlage vorgesehen sein können, wobei hier vorgeschlagen wird, dass zumindest vor einem dieser Turbolader ein katalytischer Konverter der erfindungsgemäßen Bauart vorgeschaltet ist.

Gemäß einer Weiterbildung der Abgasanlage ist dem Turbolader zumindest eine der folgenden Abgasbehandlungskomponenten nachgeordnet: Oxidationskatalysator, Partikelfilter, Stickoxid-Adsorber. Dabei ergeben sich besondere Vorzüge im Hinblick auf den Einsatz eines katalytischen Konverters mit einer selektiven Beschichtung. Bezüglich der Ausgestaltung solcher Oxidationskatalysatoren, Partikelfilter bzw. Stickoxid-Adsorber wird insbesondere auf den Offenbarungsinhalt der WO 02/083274 verwiesen, der hiermit vollständig zur Beschreibung bzw. Erläuterung herangezogen werden kann.

Schließlich wird auch ein Fahrzeug umfassend einen erfindungsgemäßen katalytischen Konverter bzw. eine vorstehend beschriebene Abgasanlage vorgeschlagen. Mit "Fahrzeug" sind insbesondere Personenkraftwagen und Lastkraftwagen gemeint.

Die Erfindung sowie das technische Umfeld werden nachfolgend anhand der Figuren näher erläutert. Dabei zeigen die Figuren teilweise besonders bevorzugte Ausführungsbeispiele der Erfindung, auf die diese jedoch nicht begrenzt ist. Es zeigen:
- Fig. 1: einen Katalysator-Trägerkörpers in Frontalansicht und in Schnittansicht;
- Fig. 2: schematisch und perspektivisch ein Detail eines erfindungsgemäßen Ausführungsbeispiels eines katalytischen Konverters;
- Fig.: 3 schematisch den Aufbau einer Abgasanlage; und
- Fig. 4: schematisch und perspektivisch ein Fahrzeug mit einer weiteren Ausführungsform einer Abgasanlage.

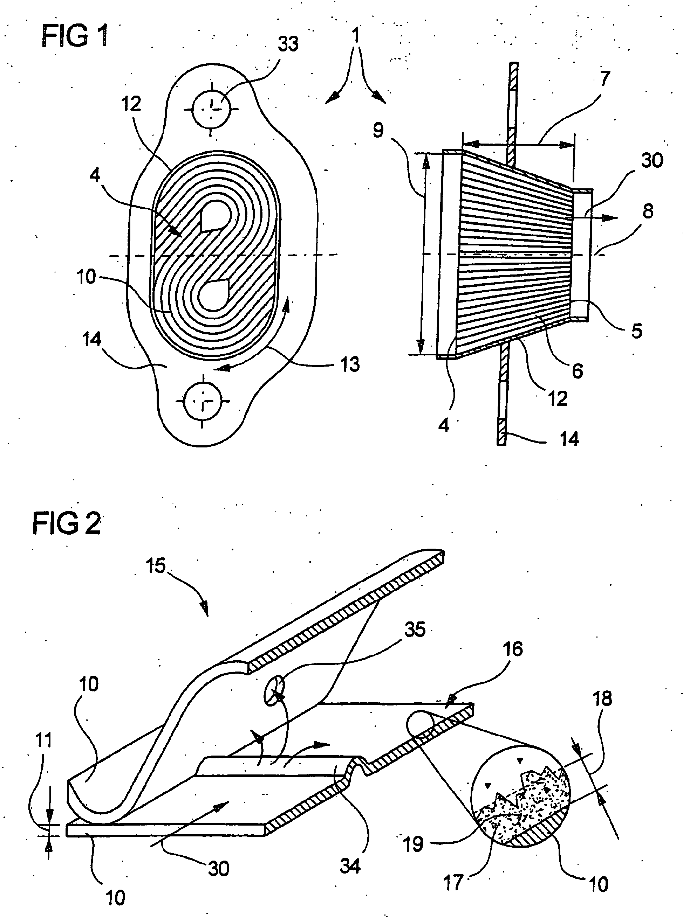

Fig. 1 zeigt in zwei Ansichten ein Ausführungsbeispiel für einen Katalysator-Trägerkörper 1, der geeignet für den Einsatz in einer Abgasanlage nahe einer Verbrennungskraftmaschine ist. In der linken Hälfte der Figur 1 ist eine frontale Ansicht eines Katalysator-Trägerkörpers 1 von dessen Eintrittsseite 4 her dargestellt. Rechts daneben ist ein Querschnitt durch diesen Katalysator-Trägerkörper 1 dargestellt.

In der Frontalansicht ist zu erkennen, dass der Katalysator-Trägerkörper 1 eine Mehrzahl metallischer Folien 10 umfasst, die im wesentlichen S-förmig geschlungen und in einem Gehäuse 12 angeordnet sind. Die Folien 10 bilden zwei größere Öffnungen (Wickellöcher), die aufgrund des Wickelns der Folien 10 entstanden sind. Die Folien 10 sind aus einem hochtemperaturfesten und korrosionsbeständigen Material, das besonders hohe Festigkeitswerte bei Temperaturen bis bzw. sogar über 900°C aufweisen. Die Folien 10 sind zumindest über einen Teil der Länge des Katalysator-Trägerkörpers 1 miteinander verlötet sowie auch zumindest teilweise mit dem Gehäuse 12. In Richtung des Umfangs 13 weist das Gehäuse 12 ein Kragenelement 14 auf, das sich senkrecht zur Achse 8 umlaufend erstreckt. Das Kragenelement 14 weist zwei Bohrungen 33 auf, die zur Fixierung des Katalysator-Trägerkörpers 1 in der Abgasanlage bzw. an der Verbrennungskraftmaschine dienen.

In der Schnittdarstellung rechts ist die konische Bauform des Katalysator-Trägerkörpers 1 mit einer großen Eintrittsseite 4 und einer kleineren Austrittsseite 5 zu erkennen. Zwischen der Eintrittsseite 4 und der Austrittsseite 5 erstrecken sich im wesentlichen parallel zueinander verlaufenden Kanäle 6, durch die Abgas in einer bevorzugten Strömungsrichtung 30 hindurchströmt. Der maximale Durchmesser 9 ist dabei größer als die Länge 7 des Katalysator-Trägerkörpers 1 bzw. der Kanäle 6, so dass das Verhältnis von Länge zu Durchmesser kleiner 1,0 ist.

Figur 2 zeigt schematisch und perspektivisch ein Detail einer erfindungsgemäßen Ausführungsform eines katalytischen Konverters 15. Dieser katalytische Konverter 15 umfasst einen Katalysator-Trägerkörper 1, der mit glatten und gewellten metallischen Folien 10 aufgebaut ist. Zwischen diesen glatten und gewellten Folien 10 bilden sich Kanäle 6 aus, durch die das Abgas in einer Strömungsrichtung 30 hindurchströmt. Die Folien 10 haben eine Foliendicke 11, die beispielsweise in einem Bereich von 40 µm bis 65 µm liegt.

Die Folien 10 sind hier mit Mitteln zur Aufrechterhaltung bzw. zur Erzeugung einer turbulenten Durchströmung des Gasstromes durch die Kanäle 6 ausgestattet. In der glatten Folie 10 ist eine Mikrostruktur 34 ausgebildet, die ein Verwirbeln von Abgasteilströmungen zur Folge hat. Solche Mikrostrukturen 34 erstrecken sich bevorzugt nur über einen geringen Abschnitt der Kanalhöhe, sind insbesondere kleiner als 50 % der Kanalhöhe, und haben vorteilhafterweise keine freistehenden Leitflügel, sondern sind als Wülste, Dellen, etc. ausgebildet. Damit ist einerseits gewährleistet, dass der Staudruck vor einem solchen katalytischen Konverter nicht zu beachtlichen Einschränkungen bzw. Reduzierungen der Motorleistung führt. Gleichzeitig wird auch ein Ablösen von relativ filigranen und labilen, frei tragenden Bestandteilen (z.B. Leitflügel) der Folie 10 vermieden. Derartige Mikrostrukturen 34 können in den glatten und/oder den gewellten Folien 10 vorgesehen sein. Gleichermaßen können auch Öffnungen 35 in den Folien 10 (gewellt und/oder glatt) Verbindungen zu benachbarten Kanälen bereitstellen, so dass eine Verwirbelung bzw. auch eine Durchmischung von Teilgasströmen ermöglicht ist. Die Folien 10 sind vollständig mit einer Beschichtung 16 versehen.

Die Beschichtung 16 ist in der vergrößerten Darstellung rechts unten in Figur 2 schematisch veranschaulicht. Die Beschichtung 16 umfasst eine Trägersubstanz 17, die direkt auf die Folie 10 aufgetragen ist. Die Trägersubstanz 17, insbesondere Washcoat, hat eine sehr zerklüftete Oberfläche und ist im allgemeinen porös. Die gemittelte Schichtdicke 18 liegt vorteilhafterweise in einem Bereich kleiner 30 µm. In den Poren der Trägersubstanz 17 bzw. auf der Oberfläche ist eine Katalysatorsubstanz 19 angeordnet, die in innigen Kontakt mit dem vorbeiströmenden Abgas gebracht wird. Hierbei werden die gewünschten chemischen Reaktionen bewirkt, insbesondere eine Konvertierung von Kohlenmonoxiden.

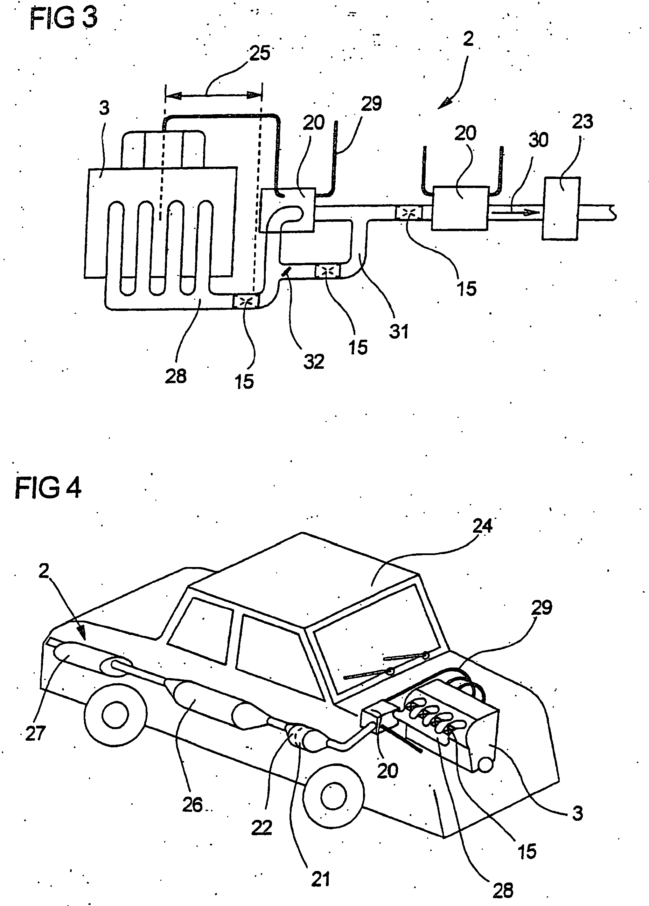

Figur 3 zeigt schematisch den Aufbau einer Abgasanlage 2 wie sie beispielsweise einer Verbrennungskraftmaschine 3, die als Dieselmotor ausgeführt ist, nachgeschaltet ist. In der Verbrennungskraftmaschine 3 wird das Abgas produziert und über den Krümmer 28 für eine gemeinsame Abgasweiterleitung zusammengeführt. Unmittelbar im Anschluss an den Krümmer 28 ist ein katalytischer Konverter 15 vorgesehen, wobei der Abstand 25, den das Abgas seit Verlassen des Brennraumes im Inneren der Verbrennungskraftmaschine 3 bis zum Erreichen des katalytischen Konverters 15 zurückgelegt hat, kleiner als 50 cm ist. Der katalytische Konverter 15 bewirkt vornehmlich eine Konvertierung von Kohlenmonoxiden, wobei bevorzugt unverbrannte Kohlenwasserstoffe durchgelassen werden.

Das Abgas verlässt nun den katalytischen Konverter 15 und strömt in Strömungsrichtung 30 auf eine Abzweigung, die mit einem Ventil 32 regulierbar ist. Diese Abzweigung betrifft eine Bypass-Leitung 31, in der eine weitere mögliche Position für einen katalytischen Konverter 15 gestrichelt angedeutet ist. Das Abgas, welches nicht durch die Bypass-Leitung 31 strömt wird einem ersten Turbolader 20 zugeführt. Das den ersten Turbolader 20 durchströmende Abgas verdichtet so die der Verbrennungskraftmaschine 3 mittels der Luftzufuhr 29 bereitgestellte Luft. Anschließend strömt das Abgas weiter in Richtung der Strömungsrichtung 30 hin zu einem zweiten Turbolader 20. Stromabwärts des Bypass-Leitungs-Ausgangs und vor dem zweiten Turbolader 20 ist eine weitere mögliche Position für einen katalytischen Konverter 15 gestrichelt angedeutet.

Nachdem der gesamte Abgasstrom nun auch den zweiten Turbolader 20 durchströmt hat, trifft er auf einen Adsorber 23, der zur zeitweiligen Speicherung von Stickoxiden dient. Die im katalytischen Konverter 15 nicht umgesetzte Menge an unverbrannten Kohlenwasserstoffen dient nun zur Regeneration dieses Adsorbers 23, indem die Kohlenwasserstoffe zur Umwandlung der Stickoxide eingesetzt und dabei selbst konvertiert werden. Nachfolgend kann das Abgas weiteren Abgasbehandlungskomponenten zugeführt werden.

Fig. 4 zeigt schematisch und perspektivisch ein Fahrzeug 24 mit einer Verbrennungskraftmaschine 3 sowie einer entsprechenden Abgasanlage 2 zur Umwandlung von im produzierten Abgas enthaltenen Schadstoffen, bevor das Abgas schließlich an die Umgebung abgegeben wird. Der Abgasstrom wird wieder über einen Krümmer 28 in die Abgasanlage 2 eingeführt, wobei bei der hier dargestellten Ausführungsvariante in jedem einzelnen Krümmerrohr ein katalytischer Konverter 15 vorgesehen ist. Das Abgas durchströmt dann wiederum einen Turbolader 20, der zur Komprimierung der Luft in der Luftzufuhr 29 dient. Anschließend wird das Abgas zunächst einem Oxidationskatalysator 21 zugeführt, der beispielsweise eine Verbrennung von unverbrannten Kohlenwasserstoffen zur Folge hat. Damit wird eine Erhöhung de Abgastemperatur bewirkt, so dass der direkt nachgeschaltete Partikelfilter 22 regeneriert wird. Dieses Abgas wird nun einem herkömmlichen Drei-Wege-Katalysator 26 und schließlich einem Schalldämpfer 27 zugeführt, bevor es die Abgasanlage schließlich gereinigt verlässt.

### Bezugszeichenliste

- 1: Katalysator-Trägerkörper
- 2: Abgasanlage
- 3: Verbrennungskraftmaschine
- 4: Eintrittsseite
- 5: Austrittsseite
- 6: Kanal
- 7: Länge
- 8: Achse
- 9: Durchmesser
- 10: Folie
- 11: Foliendicke
- 12: Gehäuse
- 13: Umfang
- 14: Kragenelement
- 15: Konverter
- 16: Beschichtung
- 17: Trägersubstanz
- 18: Schichtdicke
- 19: Katalysatorsubstanz
- 20: Turbolader
- 21: Oxidationskatalysator
- 22: Partikelfilter
- 23: Adsorber
- 24: Fahrzeug
- 25: Abstand
- 26: 3-Wege-Katalysator
- 27: Schalldämpfer
- 28: Krümmer
- 29: Luftzufuhr
- 30: Strömungsrichtung
- 31: Bypass-Leitung
- 32: Ventil
- 33: Bohrung
- 34: Mikrostruktur
- 35: Öffnung

## Patentansprüche

1. Katalytischer Konverter (15), umfassend einen Katalysator-Trägerkörper (1), aufgebaut mit glatten und gewellten metallischen Folien (10) und geeignet für den Einsatz in einer Abgasanlage (2) nahe einer Verbrennungskraftmaschine (3), bei dem sich zwischen einer Eintrittsseite (4) und einer Austrittsseite (5) nebeneinander eine Vielzahl von für einen Gasstrom durchströmbare Kanäle(6) erstrecken und dessen Folien (10) vollständig mit einer Beschichtung (16), umfassend eine Trägersubstanz (17) mit einer Katalysatorsubstanz (19) in deren Poren bzw. auf deren Oberfläche, versehen sind, wobei die Folien (10) mit Mitteln zumindest zur Aufrechterhaltung oder Erzeugung einer turbulenten Durchströmung des Gasstromes durch die Kanäle (6) ausgestattet sind, **dadurch gekennzeichnet dass** hierzu Mikrostrukturen (34) zum Verwirbeln von Abgasteilströmungen nach Art von Wülsten, Dellen und/oder Öffnungen (35) zur Verbindung benachbarter Kanälen (6) sowie zur Verwirbelung und Durchmischung von Teilabgasströmen in den glatten und/oder gewellten Folie (10) vorgesehen sind, und die Folien (10) bei einer Temperatur von 900°C (Grad Celsius) zumindest eine Dehngrenze R_{p0,2} von 50 N/mm² (Newton pro Quadratmillimeter) aufweisen.

2. Katalytischer Konverter (15) nach Anspruch 1, **dadurch gekennzeichnet, dass** der Katalysator-Trägerkörper (1) mit metallischen Folien (10) aufgebaut ist, die aus einem Eisen-Werkstoff gebildet sind, wobei als größter Legierungsbestandteil Nickel vorgesehen ist.

3. Katalytischer Konverter (15) nach Anspruch 2, **dadurch gekennzeichnet, dass** der Legierungsbestandteil Nickel in einem Bereich von 30 Gew.-% (Gewichtsprozent) bis 34 Gew.-% liegt.

4. Katalytischer Konverter (15) nach Anspruch 1, wobei dieser eine Länge (7) in Richtung einer Achse (8) und einen maximalen Durchmesser (9) hat, **dadurch gekennzeichnet, dass** das Verhältnis aus Länge (7) zu maximalen Durchmesser (9) höchstens 1 beträgt.

5. Katalytischer Konverter (15) nach Anspruch 1 oder 2, **dadurch gekennzeichnet, dass** der Katalysator-Trägerkörper (1) eine Kanaldichte hat, die im Bereich von 50 cpsi bis 600 cpsi (cells per square inch) liegt.

6. Katalytischer konverter (15) nach einem der vorhergehenden Ansprüche, **dadurch gekennzeichnet, dass** der Katalysator-Trägerkörper (1) ein Gehäuse (12) hat, dass in Richtung des Umfangs (13) mindestens ein Kragenelement (14) aufweist.

7. Katalytischer Konverter (15) nach Anspruch 1, **dadurch gekennzeichnet, dass** die Trägersubstanz (17) eine Schichtdicke (18) kleiner 30 µm (Mikrometer) aufweist.

8. Abgasanlage (2) einer Verbrennungskraftmaschine (3) umfassend einen katalytischen Konverter (15) nach einem der Ansprüche 1 bis 7, **dadurch gekennzeichnet, dass** der katalytische Konverter (15) zwischen der Verbrennungskraftmaschine (3) und einem Turbolader (20) angeordnet ist.

9. Abgasanlage (2) nach Anspruch 8, **dadurch gekennzeichnet, dass** dem Turbolader (20) zumindest eine der folgenden Abgasbehandlungskomponenten nachgeordnet ist: Oxidationskatalysator (21), Partikelfilter (22), Stickoxid-Adsorber (23).

10. Fahrzeug (24) umfassend einen katalytischen Konverter (15) nach einem der Ansprüche 1 bis 7 oder eine Abgasanlage (2) nach Anspruch 8 bzw. 9.

## Claims

1. A catalytic converter (15), comprising a catalyst support body (1) being constructed with smooth and corrugated metal foils (10) and being suitable for use in an exhaust system (2) close to an internal combustion engine (3), in which a multiplicity of passages (6) through which a gas stream can flow extend next to one another between an entry side (4) and an exit side (5) and in which the foils (10) are completely covered with a coating (10) comprising a support substance (17) with a catalyst substance being disposed in the pores and/or on the surface, wherein the foils (10) are provided with means at least for maintaining or generating a turbulent flow of the gas stream through the passages (6), **characterized in that** for this purpose microstructures (34) in form of beads, indentations and/or openings (35) are provided in the smooth and/or corrugated foils (10) for swirling up partial-flows of exhaust gas, wherein the openings are provided to produce connections to adjacent passages (6) and to swirl up and intimately mix partial gas streams, and that the foils (10) have at least a proof stress R_{p0,2} of 50 N/mm² (Newton per square millimetre) at a temperature of 900°C (Degree Celsius).

2. The catalytic converter (15) according to claim 1, **characterized in that** the catalyst support body (1) is constructed using metallic foils (10) which are formed from an iron material, in which nickel is provided as the largest alloying constituent.

3. The catalytic converter (15) according to claim 2, **characterized in that** the alloying constituent nickel is present in a range from 30% by weight to 34% by weight.

4. The catalytic converter (15) according to claim 1, which has a length (7) in the direction of an axis (8) and a maximum diameter (9), **characterized in that** the ratio of length (7) to maximum diameter (9) is at most 1.

5. The catalytic converter (15) according to claim 1 or 2, **characterized in that** the catalyst support body (1) has a passage density in the range from 50 cpsi to 600 cpsi (cells per square inch).

6. The catalytic converter (15) according to one of the preceding claims, **characterized in that** the catalyst support body (1) has a housing (12) which has at least one collar element (14) in the direction of the circumference (13).

7. The catalytic converter (15) according to claim 1, **characterized in that** the support substance (17) has a layer thickness (18) smaller than 30 µm (micrometers).

8. An exhaust system (2) of an internal combustion engine (3), comprising a catalytic converter (15) according to one of claims 1 to 7, **characterized in that** the catalytic converter (15) is arranged between the internal combustion engine (3) and a turbocharger (20).

9. The exhaust system (2) according to claim 8, **characterized in that** at least one of the following exhaust-gas treatment components is arranged downstream of the turbocharger (20): oxidation catalytic converter (21), particulate filter (22), nitrogen oxide adsorber (23).

10. A vehicle (24) comprising a catalytic converter (15) according to one of claims 1 to 7 or an exhaust system (2) according to claim 8 or 9.

## Revendications

1. Convertisseur catalytique (15), comprenant un corps support de catalyseur (1) construit avec des feuilles métalliques lisses et ondulées (10) et approprié à être utilisé dans une installation de gaz d'échappement (2) près d'une machine à combustion interne (3), dans le cas duquel une multiplicité de canaux (6), pouvant être traversés par un flux de gaz, s'étendent de manière adjacente entre un coté entrée (4) et un coté sortie (5), et dont les feuilles (10) sont garnies complètement d'un revêtement (16), comprenant une substance porteuse (17) avec une substance de catalyseur (19) dans les pores, respectivement de la surface de celle-ci, les feuilles (10) étant dotées de moyens, au moins pour maintenir ou pour générer un passage turbulent du flux de gaz à travers les canaux (6), **caractérisé en ce qu'**a cet effet des microstructures (34) sont prévues pour tourbillonner des flux partiels de gaz d'échappement selon le genre de bourrelets, de bosselures, et/ou d'ouvertures (35) pour relier des canaux adjacents (6), ainsi que pour le tourbillonnement et le mélange de flux de gaz d'échappement partiels dans les feuilles lisses et/ou ondulées (10) et **en ce que** les feuilles (10) ont à une température de 900°C au moins une limite d'élasticité R_{p0,2} de 50 N/mm² (Newton par millimètre carré).

2. Convertisseur catalytique (15) selon la revendication 1, **caractérisé en ce que** le corps support de catalyseur (1) est construit avec des feuilles métalliques (10) qui sont formées à partir d'un produit ferreux, le nickel étant prévu comme le plus grand composant d'alliage.

3. Convertisseur catalytique (15) selon la revendication 1 ou 2, **caractérisé en ce que** le composant d'alliage nickel est situé dans un intervalle de 30 % en poids à 34 % en poids.

4. Convertisseur catalytique (15) selon la revendication 1, celui-ci ayant une longueur (7) en direction d'un axe (8) et un diamètre maximal (9), **caractérisé en ce que** le rapport entre longueur (7) et diamètre maximal (9) comporte au maximum 1.

5. Convertisseur catalytique (15) selon la revendication 1 ou 2, **caractérisé en ce que** le corps support de catalyseur (1) a une densité de canaux, qui est située dans l'intervalle de 50 cpsi à 600 cpsi (cells per square inch = pouce carré).

6. Convertisseur catalytique (15) selon l'une des revendications précédentes, **caractérisé en ce que** le corps support de catalyseur (1) a un boîtier (12) qui en direction de la circonférence (13) a au moins un élément de collerette (14).

7. Convertisseur catalytique (15) selon la revendication 1, **caractérisé en ce que** la substance porteuse (17) a une épaisseur de couche (18) qui est plus petite que 30 µm (micromètres).

8. Installation de gaz d'échappement (2) d'une machine à combustion interne (3) comprenant un convertisseur catalytique (15) selon l'une des revendications 1 à 7, **caractérisée en ce que** le convertisseur catalytique (15) est agencé entre la machine à combustion interne (3) et un turbocompresseur (20).

9. Installation de gaz d'échappement (2) selon la revendication 8, **caractérisée en ce que** le turbocompresseur (20) est suivi d'au moins une des composantes de traitement de gaz d'échappement suivantes : catalyseur d'oxydation (21), filtre à particules (22), adsorbant d'oxyde d'azote (23).

10. Véhicule (24), comprenant un convertisseur catalytique (15) selon l'une des revendications 1 à 7 ou une installation de gaz d'échappement (2) selon la revendication 8, respectivement 9.
